# EUROPÄISCHE PATENTSCHRIFT

(11) **EP 0 826 556 B1**
(45) Veröffentlichungstag und Bekanntmachung des Hinweises auf die Patenterteilung: **19.12.2001**
(21) Anmeldenummer: 97113360.8
(22) Anmeldetag: 02.08.1997
(51) Int. Cl.: B60R 13/02

(54) **Deckenverkleidung eines Grossraumfahrzeuges**
Roof liner of a large capacity transport vehicle
Revêtement de toit d'une véhicule de grande volume

(30) Priorität: 30.08.1996 DE 19635142
(43) Veröffentlichungstag der Anmeldung: 04.03.1998
(73) Patentinhaber: HAPPICH Fahrzeug- und Industrieteile GmbH, 42285 Wuppertal (DE)
(72) Erfinder: Jäckel, Helmut, 52553 Velbert (DE); Acker, Rainer, 42855 Remscheid (DE)

(56) Entgegenhaltungen:
- DE-A- 3 018 072
- DE-U- 8 802 249
- PATENT ABSTRACTS OF JAPAN vol. 007, no. 291 (M-265), 27. Dezember 1983 (1983-12-27) & JP 58 164456 A (NISSAN JIDOSHA KK), 29. September 1983 (1983-09-29)
- PATENT ABSTRACTS OF JAPAN vol. 012, no. 109 (M-682), 8. April 1988 (1988-04-08) & JP 62 238139 A (KOTOBUKIYA FURONTE KK), 19. Oktober 1987 (1987-10-19)

## Beschreibung

Die Erfindung bezieht sich auf eine Deckenverkleidung eines Großraumfahrzeuges, wie Omnibus. Eine derartige Deckenverkleidung ist z.B. aus der DE-U-8 802 249 bekannt. Die Merkmale des Oberbegriffs des Anspruchs 1 gehen hieraus hervor.

Omnibusse oder dgl. Großraumfahrzeuge weisen in der Regel eine mehr oder weniger dekorativ wirkende Deckenverkleidung auf. Für die Deckenverkleidung wurde bisher biegesteife und schwere Materialien, wie Schichtstoffplatten eingesetzt. Zusätzlich waren Versteifungen durch Aluminiumprofile erforderlich, wie auch Einfaß- und Fugenprofile.

Der Erfindung liegt die Aufgabe zugrunde, eine Deckenverkleidung zu schaffen, die bei Einsatz besonders leichter Materialien und trotz großflächiger Ausbildung eine hohe Stabilität und ein verbessertes Schwing-und Durchbiegeverhalten aufweist und auch einen Toleranzausgleich ermöglicht.

Diese Aufgabe wird erfindungsgemäß dadurch gelöst, daß die Deckenverkleidung - wie aus der DE-U-8 802 249 bekannt - aus einer zumindest zweischichtigen Kunststoffplatte besteht, von der die eine Schicht eine Vielzahl von einseitg geschlossenen topfförmigen Ausstülpungen und die andere Schicht eine glatte Ausbildung aufweist und die Schichten so miteinander durch Kaschieren verbunden sind, daß die glatte Schicht auf den Böden der topfförmigen Ausstülpungen anliegt. Erfindungsgemäß ist die Kunststoffplatte mit in Abstand nebeneinander angeordneten und parallel zueinander verlaufenden Sollknickstellen und durch Abknickungen entlang der Sollknickstellen jeweils abwechselnd mit nach oben und unten offenen Kanälen ausgebildet, wobei auf die Kunststoffplatte zumindest einseitig eine die nach oben oder unten offenen Kanäle verschließende Versteifungsplatte aufgeklebt ist.

Die zumindest zweischichtige Kunststoffplatte ist ein relativ leichtes und dennoch steifes Gebilde mit hoher Festigkeit. Die Kunststoffplatte kann insbesondere aus Niederdruck-Polyethylen und Polypropylen bestehen, so daß die Sollknickstellen sich problemlos im Thermoverfahren erzeugen lassen. Die Versteifungsplatte bildet ein über die gesamte Fläche verlaufendes Stabilisierungselement und bildet zudem Kanäle, die als Luftkanäle oder zum Unterbringen von Versorgungsleitungen dienen konnen. Auch ist durch die vorgegebenen Knickstellen eine vereinfachte Montage gegeben.

Eine besonders hohe Stabilität und noch weitergehend verbessertes Schwing-und Durchbiegeverhalten kann dadurch erzielt werden, daß die Kunststoffplatte dreischichtig ausgebildet ist mit einer Mittelschicht, die eine Vielzahl von einseitig geschlossenen topfförmigen Ausstülpungen aufweist.

Zweckmäßigerweise kann ferner vorgesehen sein, daß die Versteifungsplatte eine der zwei- oder dreischichtigen Kunststoffplatte entsprechende Ausbildungen aufweist. Für Großraumfahrzeuge gehobener Ausstattungsklassse kann in Weiterbildung der Erfindung vorgesehen sein, daß an der Oberseite der Kunststoffplatte die Versteifungsplatte und an der Unterseite der Kunststoffplatte eine Dekormaterialbahn angeordnet ist. Die Dekormaterialbahn kann dabei aus Vliesen, Filzen oder z. B. auch aus einem Thermoschaumformteil, auch textilkaschiert, bestehen.

Um die Montage der Deckenverkleidung zu vereinfachen, ist die sich über die gesamte Fahrzeuglänge erstreckende Deckenverkleidung zweckmäßigerweise in Einzelelemente aufgeteilt, wobei die in Fahrzeuglängsrichtung aneinander gereihten Einzelelemente sich jeweils über die gesamte Fahrzeugbreite erstrecken. Dabei können an den Stoßstellen der Einzelelemente sich überlappende Abwinklungen und Verbindungsmittel, wie Klettbänder vorgesehen sein.

Eine weitere Ausgestaltung der Erfindung kann darin bestehen, daß die Deckenverkleidung an den Übergangsbereichen von der Fahrzeugdecke zu den Fahrzeugseitenwänden jeweils einen schräg nach unten abgewinkelten Längskantenbereich mit freien sich an den Fahrzeugseitenwänden abstützenden Rändern aufweisen. Dadurch lassen sich in den Übergangsbereichen von der Fahrzeugdecke zu den Fahrzeugseitenwänden fensternahe Luftkanäle unmittelbar an der Deckenverkleidung ausbilden, und zwar durch eine entsprechende Anordnung der erfindungsgemäß vorgesehenen Sollknickstellen. Die abgewinkelten Längskantenbereiche können dabei eine Vielzahl von Öffnungen nach Art einer Lochreihe aufweisen und dadurch in besonders einfacher Weise für eine Permanentbelüftung des Großraumfahrzeugs sorgen.

Die Deckenverkleidung kann durch randseitige Abstützprofile am Fahrzeugaufbau und zudem nach Art einer Klettbandverbindung an den Deckenlängsholmen des Fahrzeugaufbaus gehalten sein.

Bei besonderen Anforderungen kann es sich empfehlen, daß die Deckenverkleidung ganz oder bereichsweise eine rückseitig angeordnete Isoliermaterialschicht trägt. Dadurch erhält die Deckenverkleidung auch gute Wärme-, Kälte- und Geräuschisolierungseigenschaften.

Ausführungsbeispiele der Erfindung werden im folgenden anhand der Zeichnungen näher erläutert, und es zeigen:
- Fig. 1: eine Kunststoffplatte für ein Deckenverkleidungselement,
- Fig. 2: ein aus der Kunststoffplatte nach Fig. 1 gebildetes Deckenverkleidungselement,
- Fig. 3: eine in einem Großraumfahrzeug angebrachte Deckenverkleidung,
- Fig. 4: eine andere Anordnungsart einer Deckenverkleidung in einem Großraumfahrzeug.
- Fig. 5: eine Stoßstelle zwischen zwei Deckenverkleidungselementen und
- Fig. 6: eine Einzelheit nach Fig. 4.

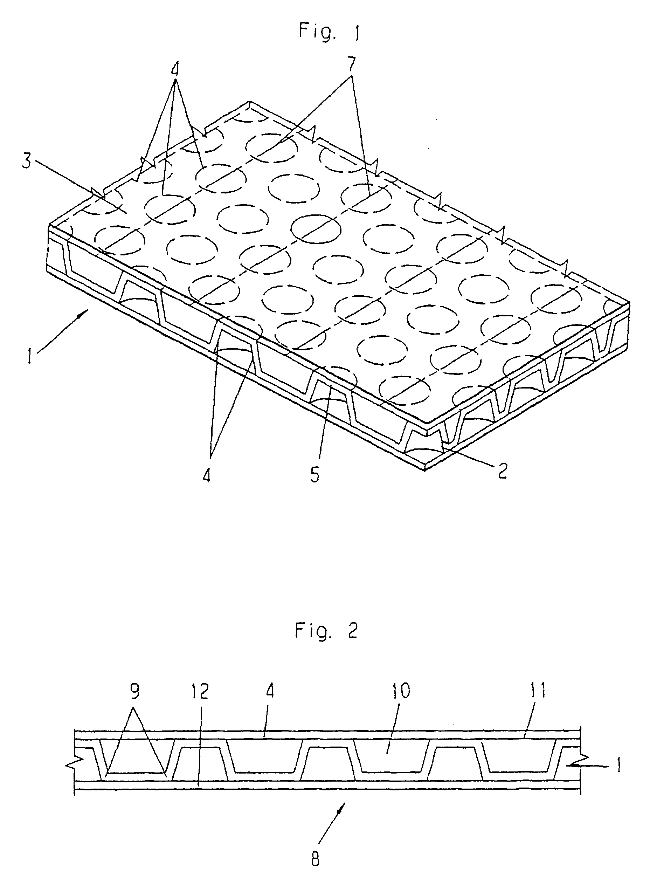

Fig. 1 zeigt in schaubildlicher Ansicht eine Kunststoffplatte 1, die zumindest einen zweischichtigen Aufbau mit einer ersten Schicht 2 und einer zweiten Schicht 3 besitzt. Die erste Schicht 2 weist eine Vielzahl von einseitig geschlossenen topfförmigen Ausstülpungen 4 auf, während die zweite Schicht 3 glatt ausgeführt ist. Die zweite glatte Schicht 3 ist auf den Böden 5 der Ausstülpungen 4 angeordnet. Vorzugsweise weist die Kunststoffplatte 1 aber - wie dargestellt - eine dritte Schicht 6 auf, die an der Unterseite der ersten Schicht 2 angebracht ist. Die Schichten 2 und 3 und ggf. 6 besitzen lediglich jeweils Folienstärke und werden im noch weichen heißen Zustand zusammengebracht und miteinander zur Kunststoffplatte 1 verbunden. Die Kunststoffplatte 1 ist ein leichtes Bauteil mit einer relativ geringen Dicke von in der Regel drei oder fünf mm.

In der Kunststoffplatte 1 nach Fig. 1 sind mit lediglich strichpunktierten Linien angedeutete Sollknickstellen 7 angebracht, die für die neue Deckenverkleidung 8 wesentlich sind. Die Sollknickstellen 7 sind mit einem vorbestimmten Abstand nebeneinander angeordnet und verlaufen parallel zueinander. Die Kunststoffplatte 1 enthält durch die, den Sollknickstellen 7 folgenden Abknickungen 9 die z. B. aus Fig. 2 ersichtliche Form, in der sie jeweils abwechselnd mit nach oben und unten offenen Kanälen 10 ausgebildet ist. Auf die so vorbereitete Kunststoffplatte 1 ist zumindest einseitig eine Versteifungsplatte 11 aufgeklebt, die vorzugsweise entsprechend der Kunststoffplatte 1 nach Fig. 1 ausgebildet ist, jedoch natürlich keine Sollknickstellen aufweist. Damit erhält die neue Deckenverkleidung 8 eine enorme Stabilität, zu der auch die Ausbildung der Kanäle 10 mit ihren schräg ausgerichteten Seitenwänden beiträgt, wodurch die Kanalöffnungen größer sind als die Kanalböden.

Auf der der Versteifungsplatte 11 gegenüberliegenden Seite der Deckenverkleidung 8 kann eine eben solche Versteifungsplatte 11 und/oder eine Dekormaterialbahn 12 aufgeklebt sein.

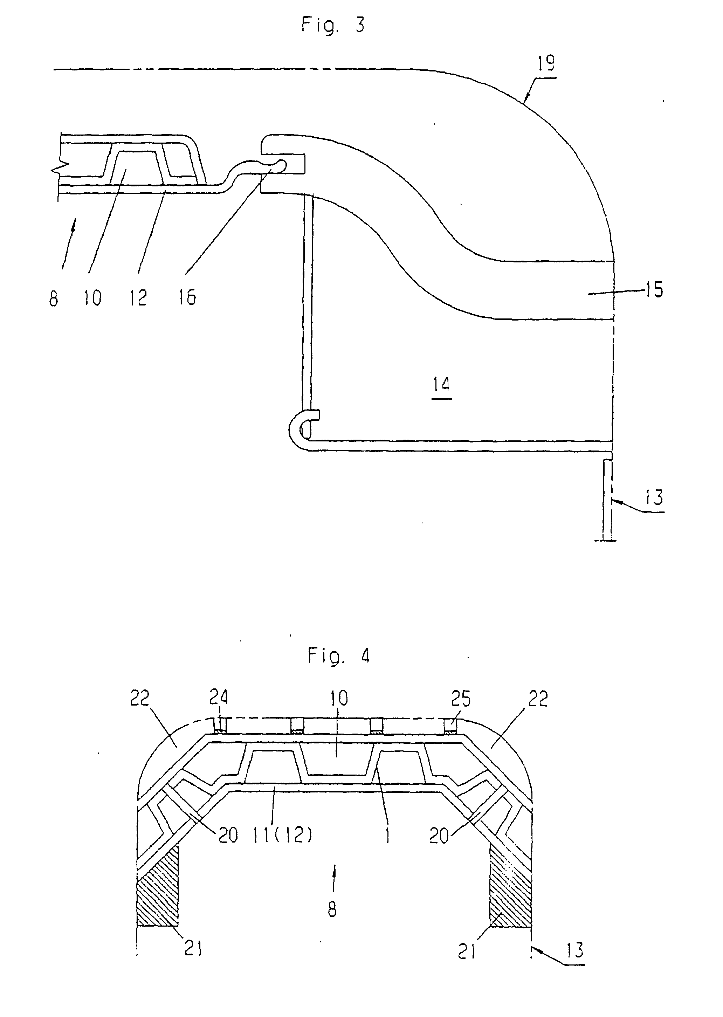

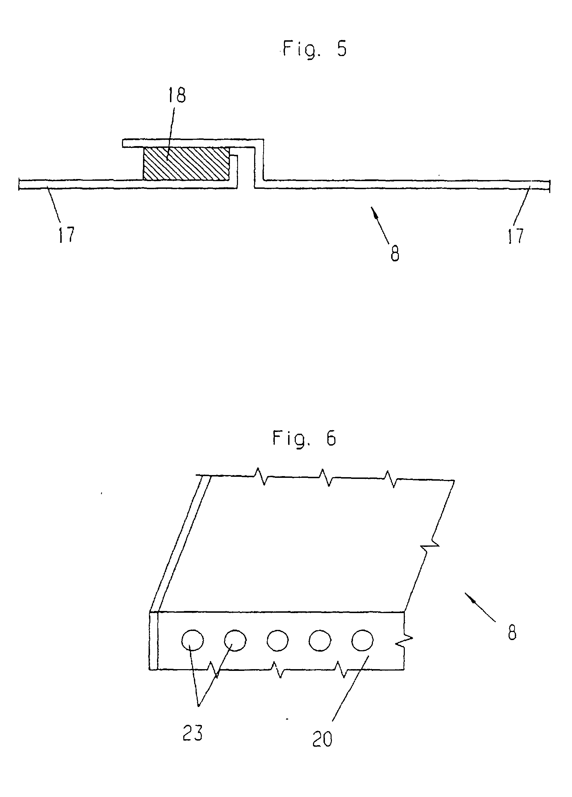

Fig. 3 zeigt einen Omnibus 13 mit einer darin eingebauten Deckenverkleidung 8, die eine anhand der Fig. 1 und 2 erläuterte Ausbildung aufweist. Ein zu einer Gepäckablage 14 gehörendes Bauteil 15 ist mit einer Aufnahmenut 16 ausgebildet, in die die Deckenverkleidung 8 mit einem Längskantenbereich eingreift. Die Deckenverkleidung 8, die sich über die Länge des Omnibusses 13 erstreckt, kann in Einzelelemente 17 von jeweils z. B. zwei Meter Länge unterteilt sein. Jedes Einzelelement 17 ist links und rechts in je einer Aufnahmenut 16 gefangen und gehalten. An den Stoßstellen der Einzelelemente 17 kann eine Verbindung der in Fig. 5 gezeigten Art vorgesehen sein, bei der eines der Einzelelemente 17 eine einfache und das andere eine doppelte Abwinklung aufweist. Die Verbindung sollte durch ein Klettband 18 gesichert sein.

Während die Deckenverkleidung 8 in Fig. 3 gegenüber der Omnibusdecke 19 abgehängt ist, zeigt Fig. 4 einen Omnibus 13 mit einer der Omnibusdecke 19 unmittelbar benachbarten Deckenverkleidung 8. An den Übergangsbereichen von der Omnibusdecke 19 zu den Omnibusseitenwänden ist die Deckenverkleidung 8 jeweils mit schräg nach unten abgewinkelten Längskantenbereichen 20 ausgebildet. Für die Abwinklungen sind auch hier wieder Sollknickstellen 7 vorgesehen. Die freien Ränder der Längskantenbereiche 20 stützen sich an den Omnibusseitenwänden ab und sind hier durch Stützprofilleisten 21 gehalten. Durch die abgewinkelten Längskantenbereiche 20 und dem Korpus des Omnibusses 13 sind in einfacher Weise Luftkanäle 22 gebildet, die über die Längskantenbereiche 20 durchsetzende Luftaustrittsöffnungen 23 mit dem Fahrzeuginnenraum zwecks permanenter Belüftung in Verbindung stehen. Die Luftaustrittsöffnungen 23 sind nach Art einer Lochreihe, wie in Fig. 6 gezeigt, angeordnet. Neben den Luftkanälen 22 können aber auch die sich in Fahrzeuglängsrichtung erstreckenden Kanäle 10 der Deckenverkleidung 8 als Luftkanäle oder auch als Kanäle für Versorgungsleitungen dienen.

Die Befestigung der Deckenverkleidung 8 nach Fig. 4 erfolgt zum einen durch die erwähnten Stützprofilleisten 21 und zum anderen über Klettbandstreifen 24, die an Dachlängsholmen 25 des Omnibusses 13 angeordnet sind.

Die Deckenverkleidung 8 kann auf ihrer dem Fahrzeugdach 19 zugewandten Seite mit einer nichtgezeigten Isoliermaterialschicht zwecks Wärme-, Kälte-und Geräuschdämmung ausgerüstet sein.

## Patentansprüche

1. Deckenverkleidung (8) eines Großraumfahrzeuges, bestehend aus einer zumindest zweischichtigen Kunststoffplatte (1), von der eine erste Schicht (2) eine Vielzahl von einseitig geschlossenen topfförmigen Ausstülpungen(4) undeinezweite Schicht (3) eine glatte Ausbildung aufweist und die Schichten (2, 3) so miteinander durch Kaschieren verbunden sind, daß die glatte Schicht (3) auf den Böden (5) der topfförmigen Ausstülpungen (4) anliegt, **dadurch gekennzeichnet, daß** die Kunststoffplatte (1) mit in Abstand nebeneinander angeordneten und parallel zueinander verlaufenden Sollknickstellen (7) und durch Abknickungen entlang der Sollknickstellen (7) jeweils abwechselnd mit nach oben und unten offenen Kanälen ausgebildet ist und wobei auf die Kunststoffplatte (1) zumindest einseitig eine die nach oben oder unten offenen Kanäle (10) verschließende Versteifungsplatte (11) aufgeklebt ist.

2. Deckenverkleidung nach Anspruch 1, **dadurch gekennzeichnet, daß** die Kunststoffplatte (1) dreischichtig ausgebildet ist mit einer Mittelschicht (2), die eine Vielzahl von einseitig geschlossenen topfförmigen Ausstülpungen (4) aufweist.

3. Deckenverkleidung nach Anspruch 1 oder 2, **dadurch gekennzeichnet, daß** die Versteifungsplatte (11) eine der zwei- oder dreischichtigen Kunststoffplatte (1) entsprechende Ausbildung aufweist.

4. Deckenverkleidung nach wenigstens einem der Ansprüche 1 bis 3, **dadurch gekennzeichnet, daß** an der Oberseite der Kunststoffplatte (1) die Versteifungsplatte (11) und an der Unterseite der Kunststoffplatte (1) eine Dekormaterialbahn (12) angeordnet ist.

5. Deckenverkleidung nach wenigstens einem der Ansprüche 1 bis 4, **dadurch gekennzeichnet, daß** die sich über die gesamte Fahrzeuglänge erstreckende Deckenverkleidung (8) in Einzelelemente (17) aufgeteilt ist, wobei die in Fahrzeuglängsrichtung aneinandergereihten Einzelelemente (17) sich jeweils über die gesamte Fahrzeugbreite erstrecken.

6. Deckenverkleidung nach wenigstens einem der Ansprüche 1 bis 5, **dadurch gekennzeichnet, daß** die Deckenverkleidung (8) an den Übergangsbereichen von der Fahrzeugdecke (19) zu den Fahrzeugseitenwänden jeweils einen schräg nach unten abgewinkelten Längskantenbereich (20) mit freien sich an den Fahrzeugseitenwänden abstützenden Rändern aufweisen.

7. Deckenverkleidung nach Anspruch 6, **dadurch gekennzeichnet, daß** die abgewinkelten Längskantenberiche (20) jeweils eine Vielzahl von Öffnungen (23) nach Art einer Lochreihe aufweisen.

8. Deckenverkleidung nach wenigstens einem der Ansprüche 1 bis 7, **dadurch gekennzeichnet, daß** die Deckenverkleidung (8) durch randseitige Abstützprofile (21) am Fahrzeugaufbau und zudem nach Art einer Klettbandverbindung an den Deckenlängsholmen (25) des Fahrzeugaufbaus gehalten ist.

9. Deckenverkleidung nach wenigstens einem der Ansprüche 1 bis 8, **dadurch gekennzeichnet, daß** die Deckenverkleidung (8) ganz oder bereichsweise eine rückseitig angeordnete Isoliermaterialschicht trägt.

## Claims

1. Ceiling covering (8) for a large-capacity vehicle, comprising an at least two-layered plastic plate (1), a first layer (2) of which has a multiplicity of cup-shaped protrusions (4) which are closed on one side, and a second layer (3) of which has a smooth design, and the layers (2, 3) are connected to each other by laminating in such a manner that the smooth layer (3) bears against the bottoms (5) of the cup-shaped protrusions (4), **characterized in that** the plastic plate (1) is designed with pre-determined bending points (7), which are arranged spaced apart next to one another and run parallel to one another, and, by bends being made along the predetermined bending points (7), with ducts which are open upwards and downwards in each case in an alternating manner, and a reinforcing plate (11) which closes the ducts (10) which are open upwards or downwards is bonded onto at least one side of the plastic plate (1).

2. Ceiling covering according to Claim 1, **characterized in that** the plastic plate (1) is of three-layered design with a central layer (2) which has a multiplicity of cup-shaped protrusions (4) closed on one side.

3. Ceiling covering according to Claim 1 or 2, **characterized in that** the reinforcing plate (11) has a design corresponding to the two- or three-layered plastic plate (1).

4. Ceiling covering according to at least one of Claims 1 to 3, **characterized in that** the reinforcing plate (11) is arranged on the upper side of the plastic plate (1) and a decorative web (12) of material is arranged on the lower side of the plastic plate (1).

5. Ceiling covering according to at least one of Claims 1 to 4, **characterized in that** the ceiling covering (8), which extends over the entire length of the vehicle, is divided into individual elements (17), the individual elements (17), which are arranged in a row next to one another in the longitudinal direction of the vehicle, each extending over the entire width of the vehicle.

6. Ceiling covering according to at least one of Claims 1 to 5, **characterized in that** the ceiling covering (8) has, at the transitional regions from the vehicle ceiling (19) to the vehicle side walls, a respective longitudinal border region (20) which is angled obliquely downwards and has free edges supported on the vehicle side walls.

7. Ceiling covering according to Claim 6, **characterized in that** the angled longitudinal border regions (20) each have a multiplicity of openings (23) in the manner of a series of holes.

8. Ceiling covering according to at least one of Claims 1 to 7, **characterized in that** the ceiling covering (8) is held on the vehicle structure by edge-side supporting profiles (21) and, in addition, on the longitudinal ceiling struts (25) of the vehicle structure in the manner of a touch-and-close fastening connection.

9. Ceiling covering according to at least one of Claims 1 to 8, **characterized in that** the ceiling covering (8) bears a layer of insulating material arranged over the entire rear side or in some regions thereof.

## Revendications

1. Revêtement de plafond (8) pour un véhicule de grand volume, se composant d'une plaque de plastique (1) en au moins deux couches, dont une première couche (2) comprend une pluralité de protubérances en forme de pot (4) fermées d'un côté et une deuxième couche (3) présente une configuration lisse et dont les couches (2, 3) sont assemblées l'une à l'autre par contrecollage, d'une manière telle que la couche lisse (3) soit appliquée sur les fonds (5) des protubérances en forme de pots (4), **caractérisé en ce que** la plaque de plastique (1) est configurée avec des lignes de brisure préférées (7) disposées à distance les unes à côté des autres et orientées parallèlement les unes aux autres et par des plis le long des lignes de brisure préférées (7) chaque fois en alternance avec des canaux ouverts vers le haut et vers le bas, et dans lequel une plaque de renforcement (11) fermant les canaux (10) ouverts vers le haut ou vers le bas est collée au moins d'un côté sur la plaque de plastique (1).

2. Revêtement de plafond suivant la revendication 1, **caractérisé en ce que** la plaque de plastique (1) est formée de trois couches avec une couche centrale (2), qui présente une pluralité de protubérances en forme de pots (4) fermées d'un côté.

3. Revêtement de plafond suivant la revendication 1 ou 2, **caractérisé en ce que** la plaque de renforcement (11) présente une configuration correspondant à la plaque de plastique (1) à deux ou trois couches.

4. Revêtement de plafond suivant au moins une des revendications 1 à 3, **caractérisé en ce que** la plaque de renforcement (11) est disposée sur la face supérieure de la plaque de plastique (1) et qu'une bande de matière décorative (12) est disposée sur la face inférieure de la plaque de plastique (1).

5. Revêtement de plafond suivant au moins une des revendications 1 à 4, **caractérisé en ce que** le revêtement de plafond (8) s'étendant sur toute la longueur du véhicule est divisé en éléments individuels (17), les éléments individuels (17) alignés l'un avec l'autre dans le sens longitudinal du véhicule s'étendant chacun sur toute la largeur du véhicule.

6. Revêtement de plafond suivant au moins une des revendications 1 à 5, **caractérisé en ce que**, dans les zones de transition du plafond du véhicule (19) aux parois latérales du véhicule, le revêtement de plafond (8) présente chaque fois une région d'arête longitudinale coudée en oblique vers le bas (20) avec des bords s'appuyant librement sur les parois latérales du véhicule.

7. Revêtement de plafond suivant la revendication 6, **caractérisé en ce que** les régions d'arête longitudinale coudées (20) présentent chacune une pluralité d'ouvertures (23) sous la forme d'une rangée de trous.

8. Revêtement de plafond suivant au moins une des revendications 1 à 7, **caractérisé en ce que** le revêtement de plafond (8) est maintenu par des profilés d'appui périphériques (21) sur la superstructure du véhicule et en outre, à la manière d'une bande velcro, aux longerons de plafond (25) de la superstructure du véhicule.

9. Revêtement de plafond suivant au moins une des revendications 1 à 8, **caractérisé en ce que** le revêtement de plafond (8) porte, en tout ou par zones, une couche de matériau d'isolation disposée sur sa face arrière.
